(19) Europäisches Patentamt
European Patent Office
Office européen des brevets

(11) **EP 3 418 989 A1**

(12) **EUROPEAN PATENT APPLICATION**

(43) Date of publication:
**26.12.2018 Bulletin 2018/52**

(51) Int Cl.:
**G07G 1/00** *(2006.01)* **G07G 1/01** *(2006.01)*
**G06Q 20/20** *(2012.01)*

(21) Application number: **18177385.4**

(22) Date of filing: **12.06.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **20.06.2017 JP 2017120618** | (71) Applicant: **Toshiba TEC Kabushiki Kaisha Tokyo 141-8562 (JP)**<br><br>(72) Inventor: **KAKINO, Tomonari Shinagawa-ku,, Tokyo 141-8562 (JP)**<br><br>(74) Representative: **Takeuchi, Maya et al Fédit-Loriot 38, avenue Hoche 75008 Paris (FR)** |

(54) **CHECKOUT APPARATUS, CHECKOUT SYSTEM, AND METHOD FOR PROMOTING USAGE OF SELF-SERVICE REGISTER**

(57) A self-service checkout apparatus includes a display device, a scanner configured to read identification information of a commodity, and a processor. The processor is programed by a registration processing program to: identify each commodity based on the identification information read by the scanner, and as identification information of each of multiple commodities is consecutively read by the scanner, determine each time the identification information is consecutively read, an interval elapsed since a last read of the identification information. The processor is further programmed to calculate a score based on the determined intervals, and control the display device to display the calculated score.

FIG.2

EP 3 418 989 A1

**Description**

FIELD

Embodiments described herein relate generally to a checkout apparatus, a checkout system and a method for promoting usage of a self-service register.

BACKGROUND

A self-service register (self-service checkout apparatus) is operated by a customer who purchases a commodity to carry out registration and settlement with respect to purchasing the commodity. In a large retail store or the like, both the self-service register and a registration apparatus which is operated by a store clerk are installed together in many cases. In such application, there is a demand for increasing usage ratio of the self-service register. For example, conventionally, a self-service register issues a lottery receipt to increase the usage ratio thereof. However, a user may feel inconvenienced in operating the self-service register using such a conventional technology. Accordingly, there remains a demand for promoting use of the self-service register.

SUMMARY OF INVENTION

To solve the above-cited problems, there is provided a self-service checkout apparatus, comprising:

a display device;
a scanner configured to read identification information of a commodity; and
a processor programed by a registration processing program to:

identify each commodity based on the identification information read by the scanner,
as identification information of each of multiple commodities is consecutively read by the scanner, determine each time the identification information is consecutively read, an interval elapsed since a last read of the identification information,
calculate a score based on the determined intervals, and
control the display device to display the calculated score as a measure of usefulness of the self-service checkout apparatus.

Preferably, the processor may further be programmed to perform a settlement processing with respect to a total price of each identified commodity, wherein the score is displayed on the display device when the settlement processing is completed.
Preferably the self-service checkout apparatus may further comprise:

an input device that receives a customer ID input by the user, wherein
the processor may further be programmed to record in a storage device, in association with each other: settlement details regarding the settlement processing, the input customer ID, the calculated score, and a current date and time.

Preferably, the processor may further be programmed to:
transmit to a server the associated settlement details, customer ID, calculated score, and current date and time.
Preferably, the processor may further be programmed to:

acquire, from the server, a ranking of the calculated score corresponding to a most recent settlement processing compared to other calculated scores, and
control the display device to display the calculated ranking.

Preferably, the ranking may be the calculated score corresponding to the most recent settlement processing compared to other calculated scores associated with other customer IDs for a predetermined period.
Preferably, the score may be calculated as a function of a total number of identified commodities divided by the interval determined for each of the total number of identified commodities.
Preferably, the score may further be calculated as a function of the weight of the total number of identified commodities.
In another exemplary embodiment, there is also provided a checkout system comprising:
a checkout apparatus that includes:

a first communication interface for data communication,
a display device,
a scanner configured to read identification information of a commodity, and
a first processor programed to:

identify each commodity based on the identification information read by the scanner,
perform a settlement processing with respect to a total price of each identified commodity,
as identification information of each of multiple commodities is consecutively read by the scanner, determine each time the identification information is consecutively read, an interval elapsed since a last read of the identification information,
calculate a score based on the determined intervals,
control the display device to display the calculated score as a measure of usefulness of the checkout apparatus, and
control the first communication interface to transmit, in association with each other: settlement details regarding the settlement processing, the input customer ID, the calculated score, and a current date and time;

a server that includes:

a second communication interface for data communication,
a memory, and
a second processor programmed to:
receive, via the second communication interface, the transmitted settlement details regarding the settlement processing, input customer ID, calculated score, and current date and time, and
control the memory to store in association with each other: the received settlement details regarding the settlement processing, input customer ID, calculated score, and current date and time.

Preferably, the second processor may further be configured to:

calculate a ranking of the calculated score corresponding to a most recent settlement processing compared to other calculated scores, and
transmit, via the second communication interface, the calculated ranking.

Preferably, the first processor may further be configured to:

receive, via the first communication interface, the transmitted calculated ranking, and
control the display device to display the calculated ranking.

Preferably, the ranking may be the calculated score corresponding to the most recent settlement processing compared to other calculated scores associated with other customer IDs for a predetermined period.
Preferably, the score may be calculated as a function of a total number of identified commodities divided by the interval determined for each of the total number of identified commodities.
In yet another exemplary embodiment, there is also provided a method of controlling a self-service checkout apparatus comprising:

reading, with a scanner, identification information of a commodity presented by a user;
identifying the commodity based on the identification information read by the scanner;
as identification information of each of multiple commodities is consecutively read with the scanner, determining each time the identification information is consecutively read, an interval elapsed since a last read of the identification information;
calculating a score based on the determined intervals; and
controlling a display device to display the calculated score as a measure of usefulness of the self-service checkout apparatus.

Preferably, the method may further comprise:
performing a settlement processing with respect to a total price of each identified commodity, wherein the score is displayed on the display device when the settlement processing is completed.
Preferably, the method may further comprise:

receiving a customer ID input by the user; and

recording, in association in a storage device: settlement details regarding the settlement processing, the input customer ID, the calculated score, and a current date and time.

Preferably, the method may further comprise:
transmitting to a server the associated settlement details, customer ID, calculated score, and current date and time.

Preferably, the method may further comprise:

acquiring, from the server, a ranking of the calculated score corresponding to a most recent settlement processing compared to other calculated scores; and

controlling the display device to display the calculated ranking.

Preferably, the ranking may be the calculated score corresponding to the most recent settlement processing compared to other calculated scores associated with other customer IDs for a predetermined period.

Preferably, the score may be calculated as a function of a total number of identified commodities divided by the interval determined for each of the total number of identified commodities.

DESCRIPTION OF THE DRAWINGS

The above and other objects, features and advantages of the present invention will be made apparent from the following description of the preferred embodiments, given as non-limiting examples, with reference to the accompanying drawings, in which:

Fig. 1 is a perspective view of a checkout apparatus according to an embodiment;
Fig. 2 is a block diagram illustrating an example configuration of the checkout apparatus and a server according to the embodiment;
Fig. 3 is a flowchart depicting an example sequence of operations of a ranking process of the checkout apparatus;
Fig. 4 is a diagram illustrating an example of a screen including a ranking displayed by the checkout apparatus after registration of a commodity is completed;
Fig. 5 is a flowchart depicting an example sequence of operations of a commodity registration process of the checkout apparatus;
Fig. 6 is a diagram illustrating an example of a count used for a score calculation by the checkout apparatus;
Fig. 7 is a diagram illustrating an example of a relationship between a score calculated by the checkout apparatus and a reading interval; and
Fig. 8 is a flowchart depicting an example sequence of operations of the server.

DETAILED DESCRIPTION

According to an embodiment, a self-service checkout apparatus includes a display device, a scanner configured to read identification information of a commodity, and a processor. The processor is programed by a registration processing program to: identify each commodity based on the identification information read by the scanner, and as identification information of each of multiple commodities is consecutively read by the scanner, determine each time the identification information is consecutively read, an interval elapsed since a last read of the identification information. The processor is further programmed to calculate a score based on the determined intervals, and control the display device to display the calculated score. Hereinafter, the present embodiment will be described with reference to the accompanying drawings.

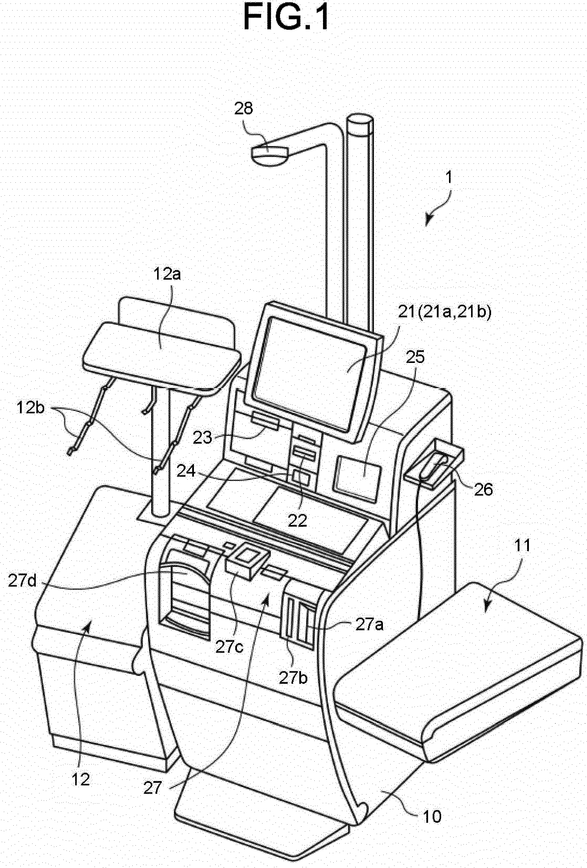

Fig. 1 is a perspective view of a checkout apparatus 1 according to the present embodiment.

The checkout apparatus 1 shown in Fig. 1 is a self-service register operated by a user (customer) who purchases a commodity to execute a commodity registration process and a checkout process. The checkout apparatus described in the following embodiment may be applied to a commodity registration apparatus in a POS system.

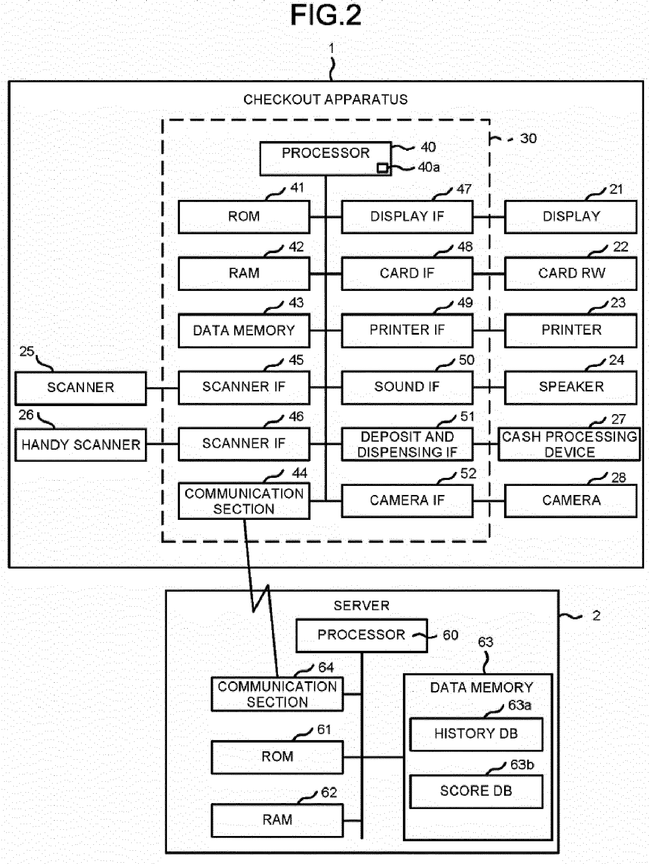

The checkout apparatus 1 shown in Fig. 1 and a server 2 described later (refer to Fig. 2) are provided in a checkout system. The server 2 is a computer that communicates with the checkout apparatus 1. For example, the server 2 manages information about a customer who uses the checkout apparatus 1 and information such as process results at the checkout apparatus 1. The checkout system is assumed to include a plurality of the checkout apparatuses 1 in communication with the server 2, although the quantity of the checkout apparatuses 1 is not limited.

As shown in Fig. 1, the checkout apparatus 1 includes a main body 10, a first commodity placement table 11 and a second commodity placement table 12 which are arranged on the left and right sides of the main body 10. A commodity to be subjected to the registration process is placed on the first commodity placement table 11, and a commodity already subjected to the registration process is placed on the second commodity placement table 12. However, the commodity to be subjected to the registration process may be placed in a shopping basket. In this case, the shopping basket containing the commodity to be subjected to the registration process may be located any position as long as it is within an image capturing range of a camera 28 (to be described later).

The first commodity placement table 11 is arranged on the right side of the main body 10. For example, a shopping basket (container) containing a commodity that the customer wants to purchase (the commodity to be subjected to the registration process) is placed on the first commodity placement table 11. The commodity that the customer wants to purchase may also be directly placed on the first commodity placement table 11. The first commodity placement table 11 may be arranged at any position as long as at least the commodity placed thereon is within an image capturing range of the camera 28.

The second commodity placement table 12 is arranged on the left side of the main body 10. A commodity taken out from the first commodity placement table 11 and subsequently subjected to the registration process is then placed on the second commodity placement table 12. For example, the commodity is registered by reading a barcode attached thereto or the commodity is registered by inputting information (commodity information) indicating the commodity through a key operation. The registered commodity is then placed on the second commodity placement table 12. In the example shown in Fig. 1, the second commodity placement table 12 has a temporary placement table 12a at the top thereof, supported via a pole, for example. The temporary placement table 12a is used, for example, to place a commodity temporarily before the commodity is put in a shopping bag. The temporary placement table 12a is provided with two holding arms 12b separated from each other on the left and right sides. The holding arm 12b holds the shopping bag (e.g., a plastic bag) in an open state.

The main body 10 is provided with a display 21, a card reader/writer (RW) 22, a printer 23, a speaker 24, a scanner 25, a hand-held scanner 26, and a cash processing device 27. The camera 28 is supported above the main body 10 via a pole, for example. These devices 21 to 28 are connected to a controller 30 (refer to Fig. 2) located in the main body 10.

The display 21 includes a display device 21a and a touch sensor 21b. The display device 21a displays operation guide, icons (e.g., touch keys) selectable by a customer, a warning message as an alert, and the like. The display device 21a also displays scores (to be described later), an ID of a customer, a settlement result with respect to purchase of the commodity, and the like. The display device 21a is, for example, an LCD (Liquid Crystal Display). The touch sensor 21b detects a position where a person touches on a display screen of the display device 21a. The touch sensor 21b sends information indicating the detected touch position to a processor (to be described later).

For example, the display device 21a displays a GUI (Graphical User Interface) for inputting selection instructions such as a payment method (by cash, by card) and various kinds of information through a touch operation by the customer. The display device 21a displays a guide screen, an information input screen, a commodity registration screen, a settlement screen, and the like. The guide screen displays a guide (message) for notifying the customer of an operation method. The information input screen is used, for example, for inputting information corresponding to a commodity with no barcode attached thereto. The commodity registration screen displays information about a registered commodity. For example, information about a commodity identified by the scanner 25 or the hand-held scanner 26 reading a barcode attached to the commodity, and information about a commodity designated by the key operation are displayed on the commodity registration screen. The settlement screen displays a total amount of purchased commodities (i.e., registered commodities), a deposit amount, and a change amount with respect to a checkout process in which a customer pays for the commodities.

The card reader/writer (RW) 22 may include a card insertion port. The card RW 22 has a function of reading data recorded on the card and a function of writing data to the card. The card processed by the card RW 22 may be a magnetic card with magnetic information or an IC card of a contact type or a non-contact type.

For example, the card RW 22 processes a settlement transaction with the card such as a credit card or a membership card which is inserted in the card insertion port. A credit card, a debit card, an electronic money card, a prepaid card and the like may be provided for the settling the transaction. The membership card includes a membership card for recording member information, or a point card for recording points that can be used as a service.

The card RW 22 may communicate with a portable terminal (a mobile phone, a smartphone, a tablet PC, or the like) having a non-contact communication function. The card RW 22 may have a mechanism for processing multiple card types.

The printer 23 prints information on an image forming medium such as a paper. The printer 23 is a thermal printer, an impact dot printer or the like. For example, the printer 23 issues a receipt by printing various character strings, images, and the like on a receipt paper. The printer 23 prints a receipt indicating processing contents such as a settlement result. The printer 23 has a receipt issuing port and discharges the printed receipt from the receipt issuing port.

The speaker 24 issues a warning sound as an alert, a notification sound as a message, or other sounds.

The scanner 25 and the hand-held scanner 26 are reading devices for reading information identifying a commodity. In the present embodiment, the scanner 25 and the hand-held scanner 26 read an image including a barcode attached to a commodity as identification information for identifying the commodity. The scanner 25 optically reads the barcode on the commodity held by the customer by facing the barcode attached to the commodity. The hand-held scanner 26 is operated by being held in a hand of the customer. The customer brings the hand-held scanner 26 close to a barcode attached to a commodity, and in this way, the hand-held scanner 26 optically reads the barcode. The scanner 25 and the hand-held scanner 26 may be any devices as long as they can read the information for identifying the commodity, for example, the scanner 25 and the hand-held scanner 26 may be devices for reading identification information other than the barcode.

The cash processing device 27 processes cash. The cash processing device 27 has a bill insertion port 27a, a bill discharge port 27b, a coin slot 27c and a coin discharge port 27d. The cash processing device 27 processes bills inserted in the bill insertion port 27a. The cash processing device 27 discharges bills as change from the bill discharge port 27b. The cash processing device 27 receives coins inserted in the coin slot 27c and processes the received coins. The cash processing device 27 discharges coins as change from the coin discharge port 27d.

The camera 28 may be arranged so as to capture an operation state for the commodity registration process and the checkout process by a customer. In this case, the camera 28 is arranged so that the first commodity placement table 11 and the second commodity placement table 12 are included within an image capturing range thereof. According to this arrangement, the camera 28 can capture images while the commodity placed on the first commodity placement table 11 is moved to the second commodity placement table 12. The images captured by the camera 28 are stored in a storage device, and the images can thereby be used to confirm a situation when an error occurs.

Further, the camera 28 may capture an image in an image capturing range including an area in which an unregistered commodity to be subjected the registration process is placed. For example, if a shopping basket containing the commodity to be subjected to the registration process is placed on the first commodity placement table 11, the image capturing range of the camera 28 is set so as to photograph the entire inside of the shopping basket. If the commodity to be subjected to the registration process is directly placed on the first commodity placement table 11, the image capturing range of the camera 28 is set so as to photograph the entire top surface of the first commodity placement table 11. The shopping basket containing the commodity to be subjected to the registration process may be arranged at a predetermined position such as near the first commodity placement table 11. In this case, the image capturing range of the camera 28 is set so as to photograph the inside of the shopping basket at the predetermined position.

Next, the configurations of control systems in the checkout apparatus 1 and the server 2 are described.

Fig. 2 is a block diagram illustrating an example configuration example of the checkout apparatus 1 and the server 2 according to the embodiment.

In Fig. 2, the main body 10 of the checkout apparatus 1 includes the controller 30. The controller 30 is realized by, for example, a computer. The display 21, the card reader/writer 22, the printer 23, the speaker 24, the scanner 25, the hand-held scanner 26, the cash processing device 27, and the camera 28 are electrically connected to the controller 30. The controller 30 includes a processor 40, a ROM (Read-Only Memory) 41, a RAM (Random-Access Memory) 42, a data memory 43, a communication section (first communication section) 44, various interfaces (IFs) 45 to 52.

The processor 40 executes various processes by executing programs. The processor 40 is, for example, a CPU (central process unit). The processor 40 realizes various processing functions by executing programs stored in the ROM 41 or the data memory 43. For example, the processor 40 executes a registration process including a score calculation process by executing a registration processing program for the registration process. The processor 40 executes a checkout process for settling a transaction based on the price of a commodity by executing a checkout program. The processor 40 has a timer 40a. The timer 40a measures an elapsed time, and is controlled by the processor 40. The timer 40a may be provided separately from the processor 40.

The ROM 41 is a non-volatile memory and stores programs and data. For example, the ROM 41 stores programs such as an operating system, a middleware, an application and the like. The ROM 41 may store data referred to when the processor 40 executes various processes.

The RAM 42 stores data for operations. The RAM 42 is used as a so-called work area. The RAM 42 appropriately stores data to be referred to or data temporarily used when the processor 40 executes various processes.

The data memory 43 stores data. The data memory 43 is a rewritable non-volatile memory. The data memory 43 is, for example, an EEPROM® (Electric Erasable Programmable Read-Only Memory), a HDD (Hard Disk Drive), a SSD (Solid State Drive) or the like. The data memory 43 stores data used when the processor 40 executes various processes or data generated in the processes executed by the processor 40. The data memory 43 may store various programs executed by the processor 40.

Further, the RAM 42 or the data memory 43 stores information about a commodity registered in the registration process (registered commodity), a calculated score, a result of the settlement process, and the like. For example, the RAM 42 or the data memory 43 may record information about the registered commodity as data in a list format (registered commodity list). The RAM 42 or the data memory 43 may store an image captured by the camera 28. For example, the data memory 43 stores image data obtained by adding time stamp data indicating an image capturing time to the image captured by the camera 28.

The communication interface 44 is an interface for communicating with the server 2. The communication interface 44 communicates with a computer such as the server 2 via a network such as a LAN (Local Area Network). The checkout apparatus 1 communicates with the server 2 and other checkout apparatuses via the communication interface 44. In the checkout system, the checkout apparatus 1 may acquire information about the commodity from the server 2 through the communication interface 44. The communication section 44 may transfer, to the server 2, information about the registered commodity stored in the RAM 42 or the data memory 43 or a settlement result for the commodity. The communication section 44 may transfer, to the server 2, the image captured by the camera 28 stored in the RAM 42 or the data memory 43.

The processor 40 is connected to the scanner 25 via a scanner IF 45. The processor 40 acquires an image (scanned image) generated by the scanner 25 through the scanner IF 45. The processor 40 is connected to the hand-held scanner 26 via a scanner IF 46. The processor 40 acquires an image (scanned image) read by the hand-held scanner 26 via the scanner IF 46. The processor 40 recognizes the commodity identified by the barcode by decoding the barcode included in the scanned image from the scanner 25 or the hand-held scanner 26.

The processor 40 is connected to the display 21 via a display IF 47. The processor 40 controls a display content displayed on the display device 21a of the display 21 via the display IF 47. The processor 40 acquires information indicating a touch position detected by the touch sensor 21b of the display 21 via the display IF 47. For example, the processor 40 displays a message as an alert or indicator on the display 21 to inform that there is a commodity (unregistered) which has not been subjected to the registration process. The processor 40 detects an input of each icon (touch key) displayed on the display 21 based on the information indicating the touch position.

The processor 40 is connected to the card reader/writer 22 via a card IF 48. The processor 40 controls processing with respect to the card by the card reader/writer 22 via the card IF 48. For example, the processor 40 executes the settlement process using a credit card processed by the card reader/writer 22.

The processor 40 is connected to the printer 23 via a printer IF 49. The processor 40 controls the printer 23 via the printer IF 49. For example, the processor 40 issues a receipt indicating the result of the settlement process with the printer 23.

The processor 40 is connected to the speaker 24 via a sound IF 50. The processor 40 controls a sound output from the speaker 24 through the sound IF 50.

The processor 40 is connected to the cash processing device 27 via a deposit and dispensing IF 51. The processor 40 controls the cash processing device 27 through the deposit and dispensing IF 51. For example, the cash processing device 27 counts the cash deposited by the customer, and the processor 40 acquires information indicating a deposit amount counted by the cash processing device 27. The processor 40 performs control causing the cash processing device 27 to dispense a change calculated from the deposited amount and a total amount (commodity price) of the commodities already registered.

The processor 40 is connected to the camera 28 via a camera IF 52. The processor 40 acquires the image captured by the camera 28 through the camera IF 52. For example, the processor 40 acquires an image obtained by the camera 28 photographing the inside of the shopping basket (container) on the first commodity placement table 11 when shifting to the checkout process. The processor 40 acquires the captured images including images obtained by the camera 28 continuously (for example, at predetermined intervals) photographing the inside of the shopping basket (container) on the first commodity placement table 11 in the registration process.

Next, the configuration of the control system in the server 2 is described.

The server 2 is, for example, a computer. In the configuration example shown in Fig. 2, the server 2 includes a processor 60, a ROM (Read-Only Memory) 61, a RAM (Random-Access Memory) 62, a data memory 63 and a communication interface 64.

The processor 60 executes various processes by executing programs. The processor 60 is, for example, a CPU (central process unit). The processor 60 realizes various processing functions by executing programs stored in the ROM 61 or the data memory 63.

The ROM 61 is a non-volatile memory and stores programs and data. For example, the ROM 61 stores programs such as an operating system, a middleware, an application, and the like. Further, the ROM 61 may store data to be referred to when the processor 60 executes various processes.

The RAM 62 stores data for operations. The RAM 62 is used as a so-called work area. The RAM 62 appropriately stores data to be referred to or data to be temporarily used when the processor 60 executes various processes.

The data memory 63 stores data. The data memory 63 is a rewritable non-volatile memory. The data memory 63 is, for example, an EEPROM® (Electric Erasable Programmable Read-Only Memory), a HDD (Hard Disk Drive), a SSD (Solid State Drive) or the like. The data memory 63 stores data used when the processor 60 executes various processes or data generated in the processes executed by the processor 60. The data memory 63 may store various programs executed by the processor 60.

The data memory 63 stores a history database (DB) 63a and a score database (DB) 63b. The data memory 63 may include a customer database 63c for storing customer (user) information including each customer's ID. The history DB 63a stores processing data as a result of a process executed by the checkout apparatus. The processing data stored in the history DB 63a indicates a result of the checkout process. In the present embodiment, the history DB 63a includes information such as a score (described later), a customer ID, a date and time, contents of the settlement process, and the like. The score DB 63b stores a score calculated in the checkout process by the checkout apparatus 1. The score DB 63b also stores data such as a ranking obtained by totaling the scores acquired from the checkout apparatus 1 in the system for each predetermined period.

The communication interface 64 is an interface for communicating with the checkout apparatus 1 in the checkout system. The communication interface 64 communicates with each checkout apparatus 1 via a network such as a LAN (Local Area Network).

The operations of the checkout apparatus 1 and the server 2 configured as described above are described below.

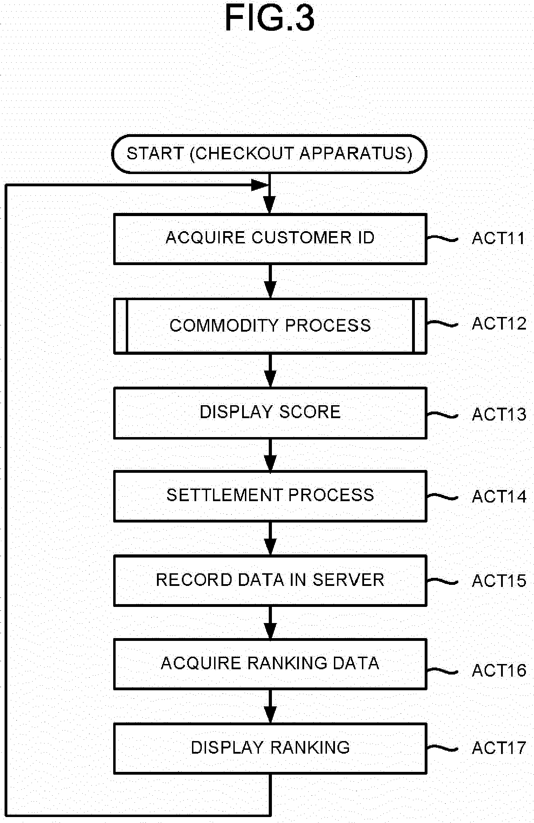

Fig. 3 is a flowchart depicting an example sequence of operations of a ranking process in the checkout apparatus 1.

The customer stands in front of the checkout apparatus 1 while carrying commodities to be purchased. The customer sets the unregistered commodities at a predetermined position. For example, the customer places a shopping basket (container) containing the commodities to be purchased on the first commodity placement table 11. After setting the commodities to be purchased at the predetermined position, the customer instructs the start of the checkout process through a predetermined operation. For example, the customer instructs the start of the checkout process by touching the touch key displayed on the display 21. The start of the checkout process may be recognized by the processor 40 according to the movement of the customer. For example, the processor 40 may recognize the movement of the customer by analyzing the image captured by the camera 28, and determine the start of the process according to the recognized movement of the customer.

If the checkout process is started, the processor 40 acquires an ID (also referred to as a customer ID) corresponding to the customer (ACT 11). The acquisition of the customer ID is not limited to using a specific method. For example, the customer ID may be read out from a card (or a portable terminal) presented by the customer to the card RW 22. The customer ID may also be input by the customer using the touch sensor 21b. The processor 40 may carry out a personal authentication (e.g., a biometric authentication such as face authentication or fingerprint authentication) in cooperation with the server 2 to acquire the customer ID of the customer successfully authenticated by the server 2.

The processor 40 may acquire the customer ID after the commodity registration process or during the settlement process. If the processor 40 does not manage the score (described later) in association with the customer ID, the processor 40 may omit the process of acquiring the customer ID of the customer. In this case, although it is not possible to manage the score to be associated with the customer ID of the customer, it is possible to display the score calculated in the checkout process.

If the customer ID is acquired, the processor 40 executes a registration process of registering the commodity to be settled (ACT 12). In the registration process, the commodity is identified according to the operation by the customer, and the information (commodity information) corresponding to the identified commodity is registered. In the registration process, a score is calculated based on a time required for registering the commodity. For example, in the registration process, the processor 40 calculates a score according to time required for the scanner 25 to read the barcode of the commodity. The registration process is described in detail later.

The customer who determines that the registration of the commodities has been completed instructs the termination of the registration process (transition to the checkout process). For example, the customer instructs the termination of the registration process by operating a touch key displayed on the display 21. If the termination of the registration process is instructed, the processor 40 displays the score calculated in the registration process on the display 21 (ACT 13). For example, the processor 40 may display the customer ID of the corresponding customer together with the score on the display 21. The processor 40 may display the score together with the information regarding the registered commodity. The processor 40 may display the score together with a settlement amount for all the registered commodities. Furthermore, the processor 40 may display the ranking in a particular period (e.g., day, week, month, etc.) together with the calculated score. The processor 40 may display the calculated score together with the past score of the customer.

After displaying the calculated score, the processor 40 executes a settlement process (checkout process) to settle the total amount of all the registered commodities (ACT 14). For example, the processor 40 specifies the price for each registered commodity to calculate a total amount of the price for all registered commodities. The processor 40 displays the calculated total amount on the display 21, and performs a process for receiving the total amount from the customer. The commodity price may be settled with a credit card presented to the card RW by the customer, or settled by cash processed by the cash processing device 27. Here, the settlement method for the commodity price is not limited to a specific method.

If the settlement process on the commodity is completed, the processor 40 executes a recording process for storing processing data indicating the customer ID, the score, the date and time and settlement contents in the server 2 (ACT 15). For example, the processor 40 generates processing data indicating the customer ID, the score, the date and time and settlement details, and transfers the generated processing data to the server 2 as data to be stored. The server 2 receives the processing data transferred from the checkout apparatus 1 through the communication section 64. If the processing data is received, the processor 60 of the server 2 stores the received score data in the score DB 63b.

After finishing the settlement process, the processor 40 acquires data (ranking data) such as ranking of the score from the server 2 (ACT 16). Here, it is assumed that the processor 40 notifies the server 2 of the termination of the settlement process and acquires the ranking data from the server 2. For example, the server 2 performs a ranking of target scores including the score contained in the processing data received from the checkout apparatus 1, and transfers a ranking result containing the ranking data back to the checkout apparatus 1. The ranking data may include a rank of the score (score in the registration process) received by the server 2, a ranking of the score in a predetermined period, past scores (past scores associated with the customer ID) of the customer, and the like.

If the ranking data is acquired from the server 2, the processor 40 displays information, such as a ranking based on the acquired ranking data, on the display 21 (ACT 17). For example, the processor 40 displays the ranking for each predetermined period for the scores calculated in the registration process after the settlement process is terminated. The processor 40 may display the ranking of scores for each predetermined period (the day, week, month, etc.) in association with the information such as ID. The processor 40 displays the score calculated in the registration process after the settlement process is terminated, together with the past score of the customer.

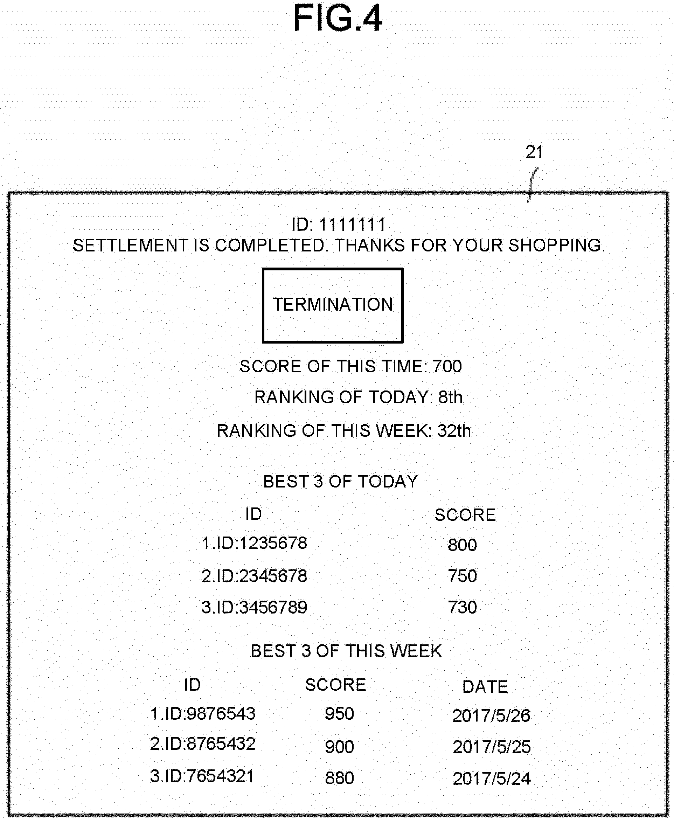

Fig. 4 is a diagram illustrating an example of a screen including the ranking that is displayed on the display 21.

The screen shown in Fig. 4 includes a settlement completion guide, a termination key for instructing termination of the process, the rank of the score calculated in the checkout process, and the ranking for each predetermined period. The rank of the score calculated in the checkout process includes a rank for the current day and a rank for the current week are displayed.

The displayed ranking for each predetermined period includes the ranking for the current day in the checkout system and the ranking for the current week. In the ranking for the current week, top three scores for the current week are displayed in association with each corresponding customer ID and the date and time. In the ranking for the current day, top three scores on that day are displayed in association with each corresponding customer ID.

If the display of the ranking as described above is terminated, the processor 40 performs a checkout process for a next customer.

The checkout apparatus 1 may display the ranking data at a desired timing. For example, the processor 40 requests the ranking data from the server 2 in response to the operation by the customer. In this case, the processor 40 displays the ranking data acquired from the server 2 in response to the request on the display 21.

The checkout apparatus 1 may also display the past score of the customer at a desired timing. For example, the processor 40 requests the past score associated with the customer ID designated by the customer from the server 2 in response to the operation by the customer. In this case, the processor 40 displays the score acquired from the server 2 in response to the request on the display 21.

The checkout apparatus 1 may also provide a service corresponding to the score to the customer. For example, the checkout apparatus 1 may give points, perform cash back, or issue a coupon or the like according to the score or a cumulative score of the customer. In this case, the processor 40 may display a guide regarding a service that can be provided according to the calculated score on the display 21.

For example, the processor 40 provides a service according to the score after the completion of the settlement. In a case of giving points according to the score, the processor 40 requests the server 2 to add points according to the score calculated after the completion of settlement to a current point total associated with the customer ID. The server 2 adds up the points in response to this request, and in this way, the checkout system can give the points according to scores. In the case of issuing a coupon ticket according to the score, the processor 40 may issue a coupon ticket given according to the score with the printer 23.

The registration process in the checkout apparatus 1 is described below.

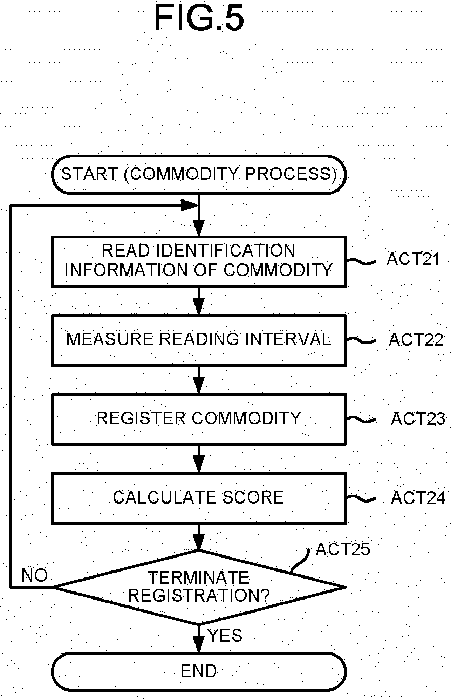

Fig. 5 is a flowchart depicting the registration process in the checkout apparatus 1.

If the registration process is started, the customer holds the barcode attached to each commodity facing the scanner 25 or the hand-held scanner 26. For example, the customer takes out the commodities placed on the first commodity placement table 11 one by one and brings the commodities close to the scanner 25 in such a manner that the barcode of the commodity faces the scanner 25. By such an operation, the processor 40 reads an image including a barcode as the identification information of the commodity using the scanner 25 or the hand-held scanner 26 (ACT 21).

For example, the scanner 25 reads an image of the barcode of the commodity which is held at a reading position. The scanner 25 supplies the read image (scanned image) to the controller 30 of the main body 10 via the scanner IF 45. The customer may bring the hand-held scanner 26 close to the barcode attached to the commodity. In this case, the hand-held scanner 26 reads the image of the barcode of the commodity which is held at the reading position. The hand-held scanner 26 supplies the read image (scanned image) to the controller 30 of the main body 10 via the scanner IF 46.

The processor 40 acquires the scanned image of the commodity via the scanner IF 45 or 46 to identify the commodity from the barcode in the acquired scanned image. For example, the processor 40 detects a barcode to identify the commodity from the scanned image and identifies the commodity by decoding the detected barcode. The identification information is not limited to the barcode, and any information that can identify the commodity may be used.

The processor 40 may receive input of the commodity information through key operation such as a touch key displayed on the display 21. For example, the processor 40 may receive, through the key operation, commodity information of a commodity with no barcode attached thereto or commodity information of a commodity whose barcode cannot be detected. If the commodity is registered through the key operation, the processor 40 does not include the time required for registration of the commodity in the calculation of scores described later.

If the commodity can be identified with the barcode, the processor 40 specifies the elapsed time between the reading of the barcode of the current commodity and the reading of the barcode of the previous commodity (ACT 22). The processor 40 operates the timer 40a starting from a point in time when a commodity is identified and measures an elapsed time. When a next commodity is identified while measuring the elapsed time with the timer 40a, the processor 40 specifies the elapsed time (reading interval) measured by the timer 40a. In this way, the processor 40 can measure the interval between reading the commodities. In the checkout apparatus 1, the commodity is identified at the time of reading the barcode of the commodity presented by the customer. Therefore, it is assumed that the reading interval of the commodity is one of indicators that fluctuate according to the operation by the customer.

If the reading interval of the commodity is specified, the processor 40 registers the information indicating the identified commodity as the commodity information of the commodity which is the settlement target (ACT 23). For example, the processor 40 adds the commodity information of the commodity which is the settlement target to the created registered commodity list in the RAM 42. In the registered commodity list, for example, data such as a commodity code, a commodity name, a unit price, input time, and the reading interval is recorded. The customer places the registered commodity on the second commodity placement table 12.

If the commodity is registered, the processor 40 calculates the score and holds the calculated score in a memory such as the RAM (ACT 24). The processor 40 calculates the score each time the commodity is registered, and updates the score held in the memory such as the RAM. For example, the processor 40 updates the score according to the reading interval of the registered commodity. The score is not limited to a value calculated by a specific calculation method, and it may be changed in response to the operation by the customer. In the present embodiment, an example of calculating the score according to the reading interval of the commodity and the commodity quantity is described.

The following equation (A) is an example of calculation formula of the score.

$$\text{Score} = 100 * N / \{\Sigma(t\_n * \alpha\_n)\} * W(N) \ldots (A)$$

Wherein, N is a commodity quantity, $t\_n$ is the reading interval (reading time) (seconds) of the commodity, $\alpha$-n is a correction factor (0.8 to 1.0) for each commodity, W(N) is a weight function (weight as a function of commodity quantity) which is equal to tanh (0.2*N).

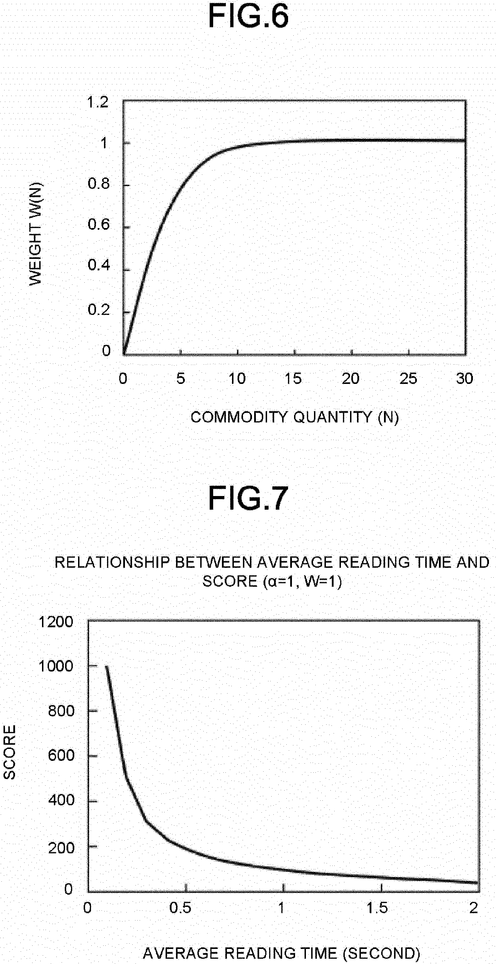

Fig. 6 is a diagram illustrating an example of the relationship between the commodity quantity and the weight function W(N) in the equation (A).

According to the example shown in Fig. 6, the more the commodity quantity is, the larger the weight becomes. Therefore, if the weight function is set based on the relationship as shown in Fig. 6, the score can be increased as the commodity quantity increases.

Fig. 7 is a diagram illustrating an example of the relationship between the reading interval and the score in the equation (A).

According to the example shown in Fig. 7, the shorter the reading interval of the commodity is, the larger the score becomes. According to the relationships as shown in Fig. 6 and Fig. 7, the score calculated through the equation (A) decreases as the commodity reading interval between commodities increases, and increases as the commodity quantity increases.

In the above example, if the customer quickly reads the barcode of the commodity with the scanner 25 or the hand-held scanner 26, the score is high. According to such a score, not only can it be expected to promote the usage of the self-service register by providing entertainment to the operation of the customer, but also an effect of improving an operation technique of the self-service register can be expected. The larger the commodity quantity is, the higher the score described above becomes. If the score becomes high for a customer who has lots of commodity quantities, it can be expected to promote the usage of the self-service register for the customer who has lots of commodity quantities, and an effect of sales promotion of the commodity can be expected as well.

The processor 40 carries out the processing in ACT 21 to 24 until registration of all the commodities is completed. If the registration (reading) of all the commodities is completed, the customer operates a termination key instructing the termination of the commodity registration. If the termination key is operated (Yes in ACT 25), the processor 40 ends the registration process. Upon termination of the registration process, the processor 40 proceeds to the processing in ACT 13 shown in Fig. 3 and displays the score.

In the registration process described above, the processor 40 may display the score calculated every time the commodity is registered on the display 21. The processor 40 may display the reading interval of the commodity measured in ACT 22 on the display 21. By displaying the score or the reading interval of the commodity in the registration process (during operation by the user), entertainment during operation can be enhanced.

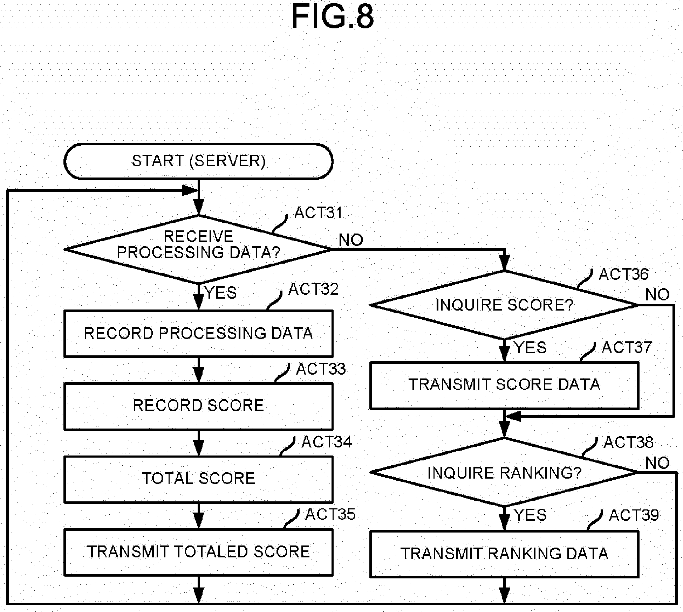

Next, an operation example of the server 2 is described. Fig. 8 is a flowchart depicting an example sequence of operations of the server. The processor 60 of the server 2 communicates with the checkout apparatus 1 via the communication section 64. If processing data is received from the checkout apparatus 1 (Yes in ACT 31), the processor 60 stores the received processing data in the history DB 63a (ACT 32). The processing data is transmitted from the checkout apparatus 1 to the server 2 as described above in connection with the processing in ACT 15 shown in Fig. 3. As described above, the processing data includes the score, the customer ID, the date and time, and the like together with the content of the settlement process in which the settlement is completed.

After the processing data is recorded in the history DB 63a, the processor 60 extracts the score included in the processing data and records it in the score DB 63b (ACT 33). After the received score is recorded, the processor 60 totals the scores for each predetermined period using the information already registered in the score DB 63b (ACT 34). After the scores are totaled for each predetermined period, the processor 60 records (updates) a totaled score result in the score DB 63b. After the totaled score result is recorded, the processor 60 transmits the totaled score to the checkout apparatus 1 (ACT 35).

If the processor 60 receives an inquiry about the score (Yes in ACT 36), the processor 60 transmits data (score data) relating to the inquired score to the inquiry source (ACT 37). For example, the processor 60 receives the inquiry about the score from the checkout apparatus 1 at a desired timing. The checkout apparatus 1, for example, designates the customer ID and inquires the server 2 for the score corresponding to the customer ID. The processor 60 of the server 2 extracts the score corresponding to the customer ID which is an inquiry target from the score DB 63b and transmits the score data indicating the extracted score.

If the inquiry for the ranking of the score is received (Yes in ACT 38), the processor 60 transmits the ranking data indicating the ranking of the score being managed to the inquiry source (ACT 39). For example, the processor 60 receives the inquiry of the ranking data from the checkout apparatus 1 at a desired timing. The checkout apparatus 1 requests the ranking of the score in the designated period to the server 2, for example. The processor 60 of the server 2 reads the ranking data indicating the ranking of the requested period from the score DB 63b and transmits it to the checkout apparatus 1.

According to the operation described above, the server collects the processing data including the score from the checkout apparatus and records the collected score in a storage device. The server totals the collected scores for each predetermined period, and stores the ranking data indicating the ranking of the scores for each predetermined period in the storage device. Further, the server transmits the ranking data indicating the ranking of the received score to the checkout apparatus which is a transmission source of the processing data including the score.

As a result, the server can manage the score calculated by the checkout apparatus 1 in the checkout system. The server can also provide information indicating the ranking of the score calculated by the checkout apparatus to the checkout apparatus. As a result, it is possible to enhance the entertainment for the customer by presenting the ranking of the score obtained by the checkout process, and to promote the usage of the checkout apparatus.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

**Claims**

1. A self-service checkout apparatus, comprising:

    a display device;
    a scanner configured to read identification information of a commodity; and
    a processor programed by a registration processing program to:

        identify each commodity based on the identification information read by the scanner,
        as identification information of each of multiple commodities is consecutively read by the scanner, determine each time the identification information is consecutively read, an interval elapsed since a last read of the identification information,

calculate a score based on the determined intervals, and
control the display device to display the calculated score as a measure of usefulness of the self-service checkout apparatus.

2. The self-service checkout apparatus according to claim 1, wherein
the processor is further programmed to perform a settlement processing with respect to a total price of each identified commodity, wherein the score is displayed on the display device when the settlement processing is completed.

3. The self-service checkout apparatus according to claim 1 or 2, further comprising:

an input device that receives a customer ID input by the user, wherein
the processor is further programmed to record in a storage device, in association with each other: settlement details regarding the settlement processing, the input customer ID, the calculated score, and a current date and time.

4. The self-service checkout apparatus according to claim 3, wherein the processor is further programmed to:
transmit to a server the associated settlement details, customer ID, calculated score, and current date and time.

5. The self-service checkout apparatus according to claim 4, wherein the processor is further programmed to:

acquire, from the server, a ranking of the calculated score corresponding to a most recent settlement processing compared to other calculated scores, and
control the display device to display the calculated ranking.

6. The self-service checkout apparatus according to claim 5, wherein the ranking is the calculated score corresponding to the most recent settlement processing compared to other calculated scores associated with other customer IDs for a predetermined period.

7. The self-service checkout apparatus according to any one of claims 1 to 6, wherein the score is calculated as a function of a total number of identified commodities divided by the interval determined for each of the total number of identified commodities.

8. A checkout system comprising:
a checkout apparatus that includes:

a first communication interface for data communication,
a display device,
a scanner configured to read identification information of a commodity, and
a first processor programed to:

identify each commodity based on the identification information read by the scanner,
perform a settlement processing with respect to a total price of each identified commodity,
as identification information of each of multiple commodities is consecutively read by the scanner, determine each time the identification information is consecutively read, an interval elapsed since a last read of the identification information,
calculate a score based on the determined intervals,
control the display device to display the calculated score as a measure of usefulness of the checkout apparatus, and
control the first communication interface to transmit, in association with each other: settlement details regarding the settlement processing, the input customer ID, the calculated score, and a current date and time;

a server that includes:

a second communication interface for data communication, a memory, and
a second processor programmed to:

receive, via the second communication interface, the transmitted settlement details regarding the settlement processing, input customer ID, calculated score, and current date and time, and

control the memory to store in association with each other: the received settlement details regarding the settlement processing, input customer ID, calculated score, and current date and time.

9. The checkout system according to claim 8, wherein the second processor is further configured to:

calculate a ranking of the calculated score corresponding to a most recent settlement processing compared to other calculated scores, and
transmit, via the second communication interface, the calculated ranking.

10. The checkout system according to claim 9, wherein the first processor is further configured to:

receive, via the first communication interface, the transmitted calculated ranking, and
control the display device to display the calculated ranking.

11. A method of controlling a self-service checkout apparatus comprising:

reading, with a scanner, identification information of a commodity presented by a user;
identifying the commodity based on the identification information read by the scanner;

as identification information of each of multiple commodities is consecutively read with the scanner, determining each time the identification information is consecutively read, an interval elapsed since a last read of the identification information;
calculating a score based on the determined intervals; and
controlling a display device to display the calculated score as a measure of usefulness of the self-service checkout apparatus.

12. The method according to claim 11, further comprising:
performing a settlement processing with respect to a total price of each identified commodity, wherein the score is displayed on the display device when the settlement processing is completed.

13. The method according to claim 11 or 12, further comprising:

receiving a customer ID input by the user; and
recording, in association in a storage device: settlement details regarding the settlement processing, the input customer ID, the calculated score, and a current date and time.

14. The method according to claim 13, further comprising:
transmitting to a server the associated settlement details, customer ID, calculated score, and current date and time.

15. The method according to claim 14, further comprising:

acquiring, from the server, a ranking of the calculated score corresponding to a most recent settlement processing compared to other calculated scores; and
controlling the display device to display the calculated ranking.

# FIG.1

# FIG.2

```
                           CHECKOUT APPARATUS
        ┌ ─ ─ ─ ─ ─ ─ ─ ─ ─ ─ ─ ─ ─ ─ ─ ─ ─ ─ ─ ─ ─ ─ ─ ─ ─ ┐   30
                        ┌─────────────────┐ 40
                        │    PROCESSOR    │
                        │             ▢───│ 40a
                        └─────────────────┘

     41                            47                          21
   ┌──────────────┐      ┌──────────────────┐     ┌──────────────────┐
   │     ROM      │──────│    DISPLAY IF    │─────│      DISPLAY     │
   └──────────────┘      └──────────────────┘     └──────────────────┘
     42                            48                          22
   ┌──────────────┐      ┌──────────────────┐     ┌──────────────────┐
   │     RAM      │──────│     CARD IF      │─────│     CARD RW      │
   └──────────────┘      └──────────────────┘     └──────────────────┘
     43                            49                          23
   ┌──────────────┐      ┌──────────────────┐     ┌──────────────────┐
   │ DATA MEMORY  │──────│    PRINTER IF    │─────│     PRINTER      │
   └──────────────┘      └──────────────────┘     └──────────────────┘
 25  45                            50                          24
┌────────┐  ┌──────────┐   ┌──────────────────┐     ┌──────────────────┐
│SCANNER │──│SCANNER IF│───│    SOUND IF      │─────│     SPEAKER      │
└────────┘  └──────────┘   └──────────────────┘     └──────────────────┘
 26  46                            51                          27
┌────────────┐ ┌──────────┐ ┌──────────────────┐  ┌──────────────────┐
│HANDY SCANNER│─│SCANNER IF│ │   DEPOSIT AND    │──│ CASH PROCESSING  │
└────────────┘ └──────────┘ │  DISPENSING IF   │  │     DEVICE       │
                            └──────────────────┘  └──────────────────┘
              44                   52                          28
        ┌──────────────┐   ┌──────────────────┐     ┌──────────────────┐
        │ COMMUNICATION│───│    CAMERA IF     │─────│     CAMERA       │
        │   SECTION    │   └──────────────────┘     └──────────────────┘
        └──────────────┘
```

```
                        SERVER                            2
              ┌──────────────────────────┐
              │    PROCESSOR     │─ 60
              └──────────────────────────┘
                                       63
   64
┌──────────────┐           ┌──────────────────────┐
│ COMMUNICATION│           │     DATA MEMORY      │
│   SECTION    │           │                 63a  │
└──────────────┘           │  ┌────────────────┐  │
   61                      │  │   HISTORY DB   │  │
┌──────────────┐           │  └────────────────┘  │
│     ROM      │───────────│                 63b  │
└──────────────┘           │  ┌────────────────┐  │
   62                      │  │    SCORE DB    │  │
┌──────────────┐           │  └────────────────┘  │
│     RAM      │───────────│                      │
└──────────────┘           └──────────────────────┘
```

# FIG.3

```
        START (CHECKOUT APPARATUS)
                    │
    ┌──────────────►│
    │               ▼
    │      ┌──────────────────────┐
    │      │  ACQUIRE CUSTOMER ID  │ ～ ACT11
    │      └──────────────────────┘
    │               │
    │               ▼
    │      ┌──────────────────────┐
    │      │   COMMODITY PROCESS   │ ～ ACT12
    │      └──────────────────────┘
    │               │
    │               ▼
    │      ┌──────────────────────┐
    │      │     DISPLAY SCORE     │ ～ ACT13
    │      └──────────────────────┘
    │               │
    │               ▼
    │      ┌──────────────────────┐
    │      │   SETTLEMENT PROCESS  │ ～ ACT14
    │      └──────────────────────┘
    │               │
    │               ▼
    │      ┌──────────────────────┐
    │      │ RECORD DATA IN SERVER │ ～ ACT15
    │      └──────────────────────┘
    │               │
    │               ▼
    │      ┌──────────────────────┐
    │      │  ACQUIRE RANKING DATA │ ～ ACT16
    │      └──────────────────────┘
    │               │
    │               ▼
    │      ┌──────────────────────┐
    │      │    DISPLAY RANKING    │ ～ ACT17
    │      └──────────────────────┘
    │               │
    └───────────────┘
```

# FIG.4

21

ID: 1111111
SETTLEMENT IS COMPLETED. THANKS FOR YOUR SHOPPING.

TERMINATION

SCORE OF THIS TIME: 700

RANKING OF TODAY: 8th

RANKING OF THIS WEEK: 32th

BEST 3 OF TODAY

| ID | SCORE |
|---|---|
| 1.ID:1235678 | 800 |
| 2.ID:2345678 | 750 |
| 3.ID:3456789 | 730 |

BEST 3 OF THIS WEEK

| ID | SCORE | DATE |
|---|---|---|
| 1.ID:9876543 | 950 | 2017/5/26 |
| 2.ID:8765432 | 900 | 2017/5/25 |
| 3.ID:7654321 | 880 | 2017/5/24 |

# FIG.5

```
           START (COMMODITY PROCESS)
                       │
                       ▼
          ┌──────────────────────────┐
          │   READ IDENTIFICATION    │ ─── ACT21
          │ INFORMATION OF COMMODITY │
          └──────────────────────────┘
                       │
                       ▼
          ┌──────────────────────────┐
          │  MEASURE READING INTERVAL │ ─── ACT22
          └──────────────────────────┘
                       │
                       ▼
          ┌──────────────────────────┐
          │    REGISTER COMMODITY     │ ─── ACT23
          └──────────────────────────┘
                       │
                       ▼
          ┌──────────────────────────┐
          │     CALCULATE SCORE       │ ─── ACT24
          └──────────────────────────┘
                       │
                       ▼           ACT25
          NO      ◇ TERMINATE ◇
          ◄───────  REGISTRATION?
                       │
                       ▼ YES
              ┌──────────────┐
              │     END      │
              └──────────────┘
```

# FIG.6

WEIGHT W(N) vs COMMODITY QUANTITY (N)

# FIG.7

RELATIONSHIP BETWEEN AVERAGE READING TIME AND SCORE ($\alpha=1$, W=1)

AVERAGE READING TIME (SECOND)

# FIG.8

```
                    START (SERVER)

                           │
                           ▼                    ACT31
                      ╱────────────╲
                     ╱   RECEIVE     ╲      NO
                    ╱ PROCESSING DATA? ╲──────────────────┐
                     ╲                ╱                    │
                      ╲──────────────╱                     │
                           │ YES       ACT32               ▼                      ACT36
                           ▼                          ╱──────────────╲
              ┌───────────────────────────┐         ╱                 ╲      NO
              │  RECORD PROCESSING DATA    │        ╱  INQUIRE SCORE?   ╲──────────┐
              └───────────────────────────┘         ╲                 ╱           │
                           │           ACT33          ╲──────────────╱            │
                           ▼                               │ YES      ACT37       │
              ┌───────────────────────────┐          ┌───────────────────────────┐│
              │      RECORD SCORE          │          │    TRANSMIT SCORE DATA     ││
              └───────────────────────────┘          └───────────────────────────┘│
                           │           ACT34               │                       │
                           ▼                               ▼◄──────────────────────┘
              ┌───────────────────────────┐                              ACT38
              │      TOTAL SCORE           │          ╱──────────────╲
              └───────────────────────────┘         ╱                 ╲      NO
                           │           ACT35        ╱  INQUIRE RANKING? ╲──────────┐
                           ▼                         ╲                 ╱           │
              ┌───────────────────────────┐          ╲──────────────╱            │
              │  TRANSMIT TOTALED SCORE    │               │ YES      ACT39       │
              └───────────────────────────┘          ┌───────────────────────────┐│
                           │                          │  TRANSMIT RANKING DATA     ││
                           ▼                          └───────────────────────────┘│
                                                           │                       │
                                                           ▼                       │
```

Europäisches
Patentamt

European
Patent Office

Office européen
des brevets

## EUROPEAN SEARCH REPORT

Application Number

EP 18 17 7385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H11 161849 A (TOSHIBA TEC KK) 18 June 1999 (1999-06-18) * abstract * * pages 1-6 * ----- | 1-15 | INV. G07G1/00 G07G1/01 G06Q20/20 |
| X | EP 3 098 791 A1 (TOSHIBA TEC KK [JP]) 30 November 2016 (2016-11-30) * abstract * * figures 1-5 * * paragraphs [0029] - [0070] * ----- | 1-15 | |

TECHNICAL FIELDS
SEARCHED (IPC)

G07G
G06Q

The present search report has been drawn up for all claims

| Place of search | Date of completion of the search | Examiner |
|---|---|---|
| The Hague | 6 September 2018 | Horat, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                             

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 7385

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2018

| Patent document cited in search report | | Publication date | Patent family member(s) | | Publication date |
|---|---|---|---|---|---|
| JP H11161849 | A | 18-06-1999 | NONE | | |
| EP 3098791 | A1 | 30-11-2016 | EP | 3098791 A1 | 30-11-2016 |
| | | | JP | 6310885 B2 | 11-04-2018 |
| | | | JP | 2016224734 A | 28-12-2016 |
| | | | US | 2016351023 A1 | 01-12-2016 |

EPO FORM P0459

For more details about this annex : see Official Journal of the European Patent Office, No. 12/82